(19) Europäisches Patentamt European Patent Office Office européen des brevets

(11) **EP 1 691 298 B1**

(12) **EUROPEAN PATENT SPECIFICATION**

(45) Date of publication and mention
of the grant of the patent:
**19.09.2007  Bulletin 2007/38**

(51) Int Cl.:
***G06F 17/22*** *(2006.01)*

(21) Application number: **06011390.9**

(22) Date of filing: **03.07.2003**

(54) **Method and system of creating and using Chinese language data and user-corrected data**

Verfahren und System zur Erzeugung und Verwendung von Daten in chinesischer Sprache und benutzerkorrigierten Daten

Procédé et système permettant de créer et d'utiliser des données de la langue chinoise et les données corrigées par l'utilisateur

(84) Designated Contracting States:
**GB**

(30) Priority: **03.07.2002  US 393948 P**
          **27.11.2002  US 305563**
          **27.11.2002  CA 2413055**

(43) Date of publication of application:
**16.08.2006  Bulletin 2006/33**

(62) Document number(s) of the earlier application(s) in accordance with Art. 76 EPC:
**03762373.3 / 1 522 027**

(73) Proprietor: **2012244 Ontario Inc.**
**Waterloo, Ontario N2L 3W8 (CA)**

(72) Inventors:
 • **Fux, Vadim**
  **Waterloo**
  **Ontario N2K 2A4 (CA)**
 • **Kolomiets, Sergey V.**
  **Waterloo**
  **Ontario N2K 3R3 (CA)**

(74) Representative: **Schmit Chretien Schihin & Mahler**
**Baaderstraße 3**
**80469 München (DE)**

(56) References cited:
 **EP-A- 1 085 401**       **US-A- 6 073 146**

**Description**

**BACKGROUND OF THE INVENTION**

**Field of the Invention**

The present invention relates generally to language data storage and text input on electronic devices, and in particular to creation and usage of Chinese language data for the purposes of text processing and text Input.

**Description of the State of the Art**

In Mandarin Chinese, every character is spoken in a mono syllabic manner. Mandarin Chinese contains over 10,000 characters that are comprised of variations of 405 base "Pinyin" characters and 5 tones. The syllabary principle is the basis for Chinese writing systems such as Hung and Tzeng, where many syllables can represent the same sound, and the same sounds are often represented by many different symbols. In addition, words are not separated by spaces in Chinese language, requiring Chinese linguistic data for proper segmentation of words during Chinese text input on electronic devices. Research reveals that static linguistic data is not sufficient to provide proper word segmentation in most cases. Only systems with learning of user input patterns provide a level of segmentation accuracy for efficient Chinese text input. Thus, extensive linguistic data is required, accounting for the very high memory usage by most Chinese text input systems.

Existing solutions for storage and use of linguistic data for purposes of text input employ such data structures as hash tables, trees, databases or word lists. These solutions are not feasible in many modem systems, in that they require significant memory and code space to store and support the complex data structures they rely upon, and consume a large amount of processing resources. Electronic devices such as portable electronic devices, including mobile communication devices, for example, have limited processing and memory resources which preclude the use of these existing solutions.

US 6,073,146 discloses a system and a language data structure for use in converting Chinese Pinyin syllables to Chines Hanzi characters. A process determines that a syllable has been entered when a delimiter key is struck. An entered phonetic syllable is then compared to a list of acceptable phonetic syllables. If the entered syllable is on the list, the correctly spelled and accented syllable is stored in memory and displayed on a phonetic portion of a graphical display. The words string, being defined as the string of characters between two delimiters, is analyzed to unambiguously determine the proper Hanzi characters that represent the words in the word string. A data structure comprises a plurality of Hanzi character candidate lists comprising character candidates associated with a Pinyin syllable. A value in a language data record comprises a sequence of indexes of Hanzi character candidates in the list of candidates which are associated with the Pinyin syllables of the word.

EP 1 985 401 relates to the input of symbols on a mobile phone. Each key has associated with it a plurality of different symbols. The key pad is used to enter symbols in the form of Pinyin strings into the display which are then used to determine a candidate list of Chinese characters which are presented in the display. Symbols are entered into the display by pressing respective keys. The selection of a symbol is only permitted if it corresponds to a valid Pinyin string. Characters chose from the candidate list are entered into a message in the display.

SUMMARY

A language data structure for use in converting Chinese Pinyin syllables into Chinese Hanzi characters on a computer system comprises a plurality of Hanzi character candidate lists, each list comprising Hanzi character candidates associated with a Pinyin syllable, and each Hanzi character candidate in each list having an index in the list, and a plurality of language data records, each language data record corresponding to a word having a plurality of Pinyin syllables and comprising a key and a value, wherein the key in each language data record comprises a sequence of indexes and tone information for the Pinyin syllables of the word to which the language data record corresponds, and wherein the value in each language data record comprises a sequence of indexes of Hanzi character candidates, in the lists of candidates respectively associated with the Pinyin syllables of the word, that represent the Pinyin syllables of the word.

A method of creating Chinese language data on a computer system comprises the steps of generating identifiers for each of a plurality of Chinese Pinyin syllables, storing the generated identifiers in an array of identifiers, each identifier in the array of identifiers having an array index, generating a plurality of Hanzi character candidate lists, each list comprising Hanzi character candidates associated with a Pinyin syllable, and each Hanzi character candidate in each list having a candidate index in the list, and for each of a plurality of words having multiple Pinyin syllables, generating a data record comprising a key and a value, wherein the key comprises an array index of the identifier in the array of identifiers for each of the multiple Pinyin syllables and tone information for each of the multiple Pinyin syllables, and wherein the value comprises a candidate index, in the list of candidates associated with each of the multiple Pinyin syllables, of the candidate that represents each of the multiple Pinyin syllables.

In accordance with a further embodiment of the invention, a system of using Chinese language data for converting Chinese Pinyin syllables into Chinese Hanzi characters is provided. The language data includes a plurality of Hanzi character candidate lists, each list comprising Hanzi character candidates associated with a Pinyin syllable, and each Hanzi character candidate in each list having an index in the list, and a plurality of language data records, each language data record corresponding to a word having a plurality of Pinyin syllables and comprising a key and a value. The key in each language data record comprises a sequence of indexes and tone information for the Pinyin syllables of the word to which the language data record corresponds and the value in each language data record comprises a sequence of indexes of Hanzi character candidates, in the lists of candidates respectively associated with the Pinyin syllables of the word, that represent the Pinyin syllables of the word. The system comprises a keyboard having keys representing a plurality of characters for composing Pinyin syllables, an input queue configured to receive input Pinyin syllable from the keyboard, a memory configured to store the plurality of Hanzi character candidate lists and the plurality of data records, an input processor operatively coupled to the memory and the input queue and configured to segment the input Pinyin syllables into Input words, to search the language data records for language data records respectively corresponding to each input word including the input Pinyin syllables, and to convert each input word into the Chinese Hanzi character candidates using the Hanzi character candidate indexes in the corresponding data record, a display, and a user interface coupled between the display and the input processor to display the input Pinyin syllables on the display and to replace the input Pinyin syllables with the Chinese Hanzi character candidates when the input Pinyin syllables are converted by the input processor.

Further features of the invention will be described or will become apparent in the course of the following detailed description.

## BRIEF DESCRIPTION OF THE DRAWINGS

Fig.1 shows an array of unique identifiers for Bopomofo syllables.
Fig. 2 shows an array of unique identifiers for Pinyin syllables;
Fig. 3 shows an array of correspondences between Pinyin syllables and Bopomofo syllables;
Fig. 4 shows a tone Information array;
Fig. 5 is a block diagram showing a format of a language data record for a multiple-character word;
Fig. 6 is a block diagram of an example language data record;
Fig. 7 is a block diagram showing a format of a language data record for a two-character word;
Fig. 8 is a block diagram showing an example language data record for a two-character word;
Fig. 9 shows a block diagram of a learning language data header;
Fig.10 shows a block diagram of an example learning language data header;
Fig. 11 is a block diagram showing a learning language data array;
Fig. 12 is a flow diagram of a method of using language data; and
Fig. 13 is a block diagram of a system of using language data.

## DETAILED DESCRIPTION

According to one aspect of the invention, a system and method of creation and use of language data is based on Chinese syllable and character indexing. Indexing enables language data storage with less memory use and faster searching of and access to words relative to known Chinese text input techniques.

There are 410 syllables (sounds) in the Pinyin system (1981), including 405 base Pinyin characters and 5 tones, that can be used for Chinese Input. Pinyin syllables are constructed from the 26 characters of the Latin alphabet, and are therefore commonly used for Chinese text entry on keyboards in which Latin characters are represented. Each of the 26 characters of the Latin alphabet can be assigned an index value of between 0 and 25, indicating its position in the alphabet. For example, the letter "A" is at index 0, "B" is at index 1, and so on, with "Z' at index 25.

Alternatively, the 410 Chinese syllables can also be constructed from the 37 "Bopomofo" characters. These characters reside in a contiguous Unicode range, 0x3105 through 0x3129, and as such can also be indexed by decimal numbers 0 through 36. The index of 0 corresponds to the first character in the Unicode range, 0x3105, the index of 1 corresponds to the second character in the Unicode range, 0x3106, and so on.

Using the above indexes, each Pinyin and Bopomofo syllable may thus be represented by a unique identification number. According to an embodiment of the invention, a unique identification number for any (n+1)-character syllable is calculated using the following formula:

$$ID = index_0 * (N^0) + index_1 * (N^1) + \ldots + index_n * (N^n),$$

where:

$index_0$ is the index of the first character in the syllable,
$index_1$ is the index of the second character in the syllable,
$index_n$ is the index of the (n+1)th character in the syllable, and
N is the highest index of the characters used for syllable construction.

For example, in the Bopomofo syllable "ㄌㄧㄠ", the index of the first character ㄌ, which has a Unicode number 0x310C, is 0x310C minus the Unicode number of the first Bopomofo character, 0x3105. Thus, $index_0$ = 0x310C - 0x3105 = 7. Similarly, $index_1$ is the index of the second character "-", which is 0x3127 - 0x3105 = 0x0022 = 34, and

$index_2$ is the index of the third character "ㄠ", which is 0x3120 - 0x3105 = 0x001 B = 27. Since the highest index for a Bopomofo character is 36, N=36 for Bopomofo syllable identifiers. Therefore, the identifier for this syllable, according to the above formula, is:

$$ID = 7 * (36^0) + 34 * (36^1) + 27 * (36^2) = 7 + 1224 + 34992 = 36223.$$

Unique identification numbers can similarly be calculated for each of the Pinyin syllables, with $index_n$ being between 0 and 25, and N=25.

The above formula allows a unique identifier to be assigned to each Pinyin and Bopomofo syllable. The Pinyin and Bopomofo syllables are then stored in respective arrays, sorted according to unique identifier.

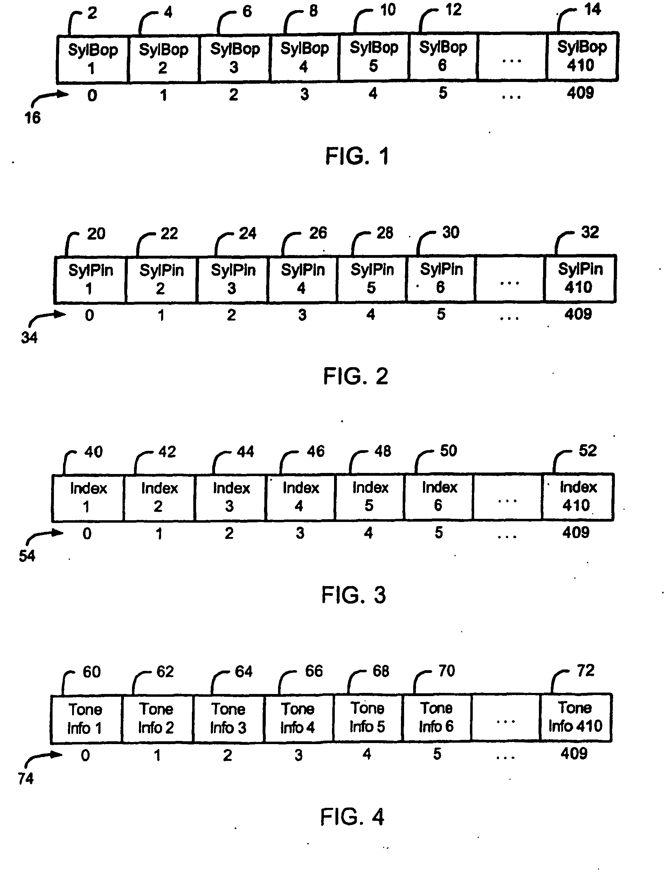

Fig.1 shows an array of unique identifiers for Bopomofo syllables. The array of Fig. 1 shows the unique identifiers 2, 4, 6, 8, 10, 12, and 14, representing the first 6 identifiers and the last (410th) identifier. The identifiers 2 though 14, and intervening identifiers between SylBop 6 and SylBop 410, are preferably sorted in increasing order, such that SylBop 1 is the lowest identifier, and SylBop 410 is the highest identifier. Array indexes, ranging from 0 to 409, are also shown in Fig. 1 at 16.

Fig. 2 shows an array of unique identifiers for Pinyin syllables. The first 6 Pinyin syllable identifiers 20, 22, 24, 26, 28, and 30, and the last identifier 32, are representative of the 410 unique identifiers in the Pinyin symbol identifier array. Indexes 34 for the Pinyin syllable identifier array, like the indexes 16, range from 0 to 409.

As shown in Figs. 1 and 2, the identifiers for the Bopomofo and Pinyin syllables reside in different arrays. It will also be apparent to those skilled In the art that these identifiers do not have a strict correspondence by index. The identifiers SylBop a at index a-1 in the array of Bopomofo syllable identifiers and SylPin a at index a-1 in the, array of Pinyin syllable identifiers do not necessarily identify a Bopomofo syllable and its corresponding Pinyin syllable counterpart. There is, therefore, an additional array containing information on the correspondence between "Bopomofo" and Pinyin syllables.

Fig. 3 shows an array of correspondences between Pinyin syllables and Bopomofo syllables. Elements 40-50 and 52, as well as intervening array elements between elements 50 and 52, in the correspondence array are indexes to either the Pinyin identifier array or the Bopomofo identifier array. The indexes 54 to the correspondence array correspond to indexes to the other of the Pinyin identifier array and the Bopomofo identifier array. For example, where the indexes 54 to the correspondence array correspond to the indexes 34 of the Pinyin identifier array, elements of the correspondence array are indexes 16 to the Bopomofo identifier array. In this case, the array element index b, at index b-1 in the correspondence array, is the index of the Bopomofo identifier array of the Bopomofo identifier for the Bopomofo syllable corresponding to the Pinyin syllable having the identifier at Index b-1 in the Pinyin identifier array. In other words, the Pinyin syllable identified by SylPin(b-1) corresponds to the Bopomofo syllable identified by SylBop(Index b). Thus, the correspondence array provides the index of the Bopomofo identifier corresponding to a Pinyin identifier, It should be apparent that in the correspondence array, indexes 54 may instead correspond to the Bopomofo identifier array indexes 16, with the elements then storing Pinyin identifier array indexes.

Fig. 4 shows a tone information array. The tone information array Is a further array of bytes that consists of 410 elements, haying indexes 0 through 409. The tone information array includes elements 60-70, intervening elements not explicitly shown in Fig. 4, and element 72. This array contains tone information for all 410 Bopomofo syllables and has strict correspondence with the array of "Bopomofo" syllables. The tone information element Tone info c, at index c-1, corresponds to the Bopomofo syllable identifier SylBop c, at the same index c-1 of the Bopomofo identifier array. The first five bits in each byte of the tone information array show whether the Bopomofo syllable identified at the same index of the Bopomofo identifier array can be used with any of the 5 Chinese language tones.

Every Pinyin and Bopomofo syllable has several corresponding Chinese "Hanzi" characters, forming a list of "candidates", which are stored in respective corresponding arrays for each Pinyin and Bopomofo syllable using 2-byte values. Each "candidate" in such an array has a unique index in the array. Thus, every Chinese word may be represented by a sequence of the indexes of its syllables and the indexes of the corresponding Chinese Hanzi characters of which the word is constructed.

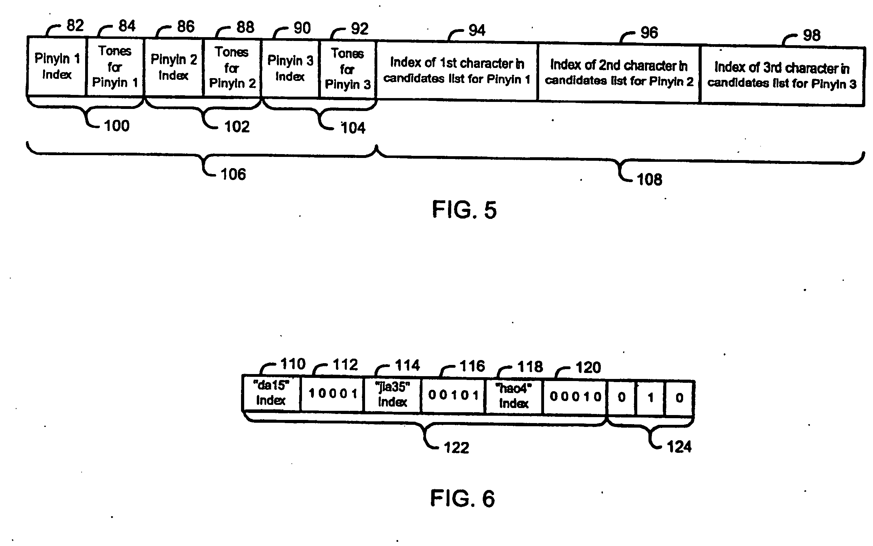

In an example of the invention, language data includes records for Chinese words ranging in length from 2 to 8 syllables, organized in separate arrays, where records for words with the same length reside in the same array without delimiters. Fig. 5 is a block diagram showing a format of a language data record for a multiple-character word.

The record in Fig. 5 corresponds to a multiple-character word having 3 syllables, including Pinyin 1, Pinyin 2, and Pinyin 3. For each Pinyin syllable in the word, the index of the syllable and an indication of the tones that may be used with the syllable are stored in the record. The syllable indexes, which correspond to the indexes of the syllables in the Pinyin array of Fig. 2, are shown at 82, 86, and 90, and the tones are shown at 84, 88, and 92. The index and tone information form entries 100, 102, and 104 for each syllable.

As described above, a list of candidates of Hanzi characters is stored in a corresponding array for each Pinyin and Bopomofo syllable. The indexes 94, 96, and 98 are indexes, in the list of candidates, of Hanzi characters that represent the Pinyin syllables. The index 94 is the index, in the list of candidates for Pinyin 1, of the first Hanzi character in the word corresponding to the record in Fig. 5. Similarly, the indexes 96 and 98 are the indexes, in the lists of candidates for Pinyin 2 and Pinyin 3, of the second and third Hanzi characters, respectively, in the word corresponding to the record in Fig. 5.

A language data record for a word thus includes a key 106 and a value 108, where the key 106 is a sequence of indexes and tone information 100, 102, and 104 for syllables that represents the word and the value 108 is a sequence of indexes of Hanzi characters 94, 96, and 98 that represents the syllables. In order to facilitate efficient searching of language data, records are preferably sorted by the index of the first syllable.

Fig. 6 is a block diagram of an example language data record. The language data record in Fig. 6 has the format shown in Fig. 5, including a sequence of Pinyin syllable indexes 110, 114, and 118, and tone information 112, 116, and 120, as a key 122, and a value 124 representing a sequence of Chinese character Indexes.

The Pinyin index 110 is the index of the Pinyin identifier in the Pinyin identifier array of the Pinyin "da15". The "15" in "da15" represents the first and fifth tones. Those familiar with Pinyin syllables will appreciate that the first tone is the high level tone, the second tone is the rising tone, the third tone is the low level tone, the fourth tone is the falling tone, and the fifth tone is the neutral tone. Each tone is preferably associated with a bit position in a 5-bit tone information entry In a language data record. Each valid tone for a Pinyin character is indicated by setting a bit in a corresponding position of the tone information entry to a predetermined value. In the tone information entry 112, the tones first and fifth tones are indicated by the high bit value in the first and fifth bit positions. Alternatively, the predetermined bit value may be low. The other index and tone information entries 114/116 and 118/120 in Fig. 6 are similarly formatted.

The minimum length of a language data record is dependent upon minimum lengths of the indexes in a data record. As described above, there are 410 Pinyin syllables, which establishes a minimum length of 9 bits for each Pinyin index. Tone information entries preferably include 1 bit per tone, or 5 bits per entry. Although each candidates list index in the value 124 is shown as a single bit, it will be appreciated that the length of each candidates list index is dependent upon the number of candidates in a candidates list. Since variable-length indexes typically require delimiters between indexes or relatively complex management techniques, fixed-length indexes are generally preferred. Therefore, the length of all candidates list indexes is preferably dependent upon the number of candidates in the longest candidates list.

As those skilled in the art will appreciate, most memory components support access to byte-wide memory segments. Therefore, language data records are preferably formatted to occupy a number of whole bytes. For example, each index and tone information pair in a language data entry may be stored as a two-byte entry, in which at least the first byte and the first bit of the second byte (i.e., at least 9 bits) store the index, and the last 5 bits store the tone information. Similarly, byte-wide candidate list indexes form a 3-byte record value 124, and support up to 256 candidates in any of the candidate lists. With this type of byte assignment, the data record in Fig. 6 comprises a 6-byte key 122 and a 3-byte value 124.

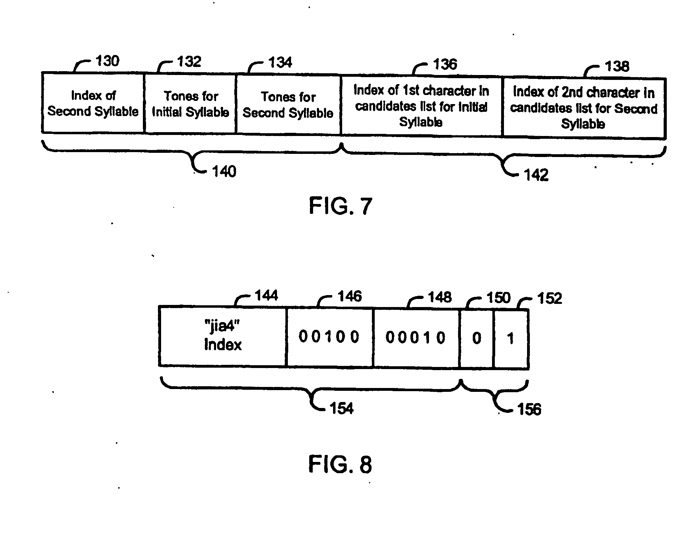

To further compact the language data, two-character words are preferably stored in a dedicated format. Since the majority of Chinese words are two-character words, space savings for records associated with two-character words results in a significant reduction in overall memory space requirements. Fig. 7 is a block diagram showing a format of a language data record for a two-character word.

As mentioned above, there are only 410 Piriyin syllables used in Chinese text. Every syllable that can be an initial syllable has its own pairs, each pair including an initial syllable plus a variant. Variants for each initial syllable are the syllables which may follow the initial syllable. For this reason, it is not necessary to store an initial syllable in each pair for a particular initial syllable, as it is always the same.

Moreover, indexes of initial syllables are compatible with the indexes of an array of offsets, so initial syllables need not be stored at all - their indexes are the same as the indexes of an array of offsets. The array of offsets is an array in which, at each index corresponding to a particular initial syllable, an offset in an array of data records for two-character words where an index of the first variant for this initial syllable is stored. For example, the first offset in the array of offsets Is the offset of the first variant for a first initial syllable, which is 0 for the first initial syllable. In a preferred embodiment, initial syllables are ordered according to unique identifier or index in an array of identifiers, such that the first initial syllable is the initial syllable having the lowest, or, alternatively, the highest, unique identifier. Where there are 2 variants for the first initial syllable, the second offset in the array of offsets, corresponding to the first variant for the second initial syllable, is 2, since the first variant for the second initial syllable is offset from the first record by 2. Alternatively, the array of offsets could specify indexes of first variants for each corresponding initial syllable in the array of data records.

Each two-character word preferably has the format shown in Fig. 7, which is a block diagram showing a format of a language data record for a two-character word. The record in Fig. 7 includes the index of the second syllable 130, tone information 132 and 134 for the initial and second syllables, and indexes 136 and 138 of the respective Chinese characters that represent the initial and second syllables. Indexes and tone information have been described above.

In a language data record for a two-character word, the key 140 includes the index 130 for the second syllable and tone information 132 and 134 for both syllables. Like the language data records shown in Figs. 5 and 6, the value 142 includes a sequence of indexes of Chinese characters 136 and 138. As described above, data records for variants of the same Initial syllable are grouped together so that variants for an initial syllable can be found using an array of offsets. Data records for variants of the same initial syllable may also be sorted by the index 130 of the first syllable.

Fig. 8 is a block diagram showing an example language data record for a two-character word. The language data record of Fig. 8 is in the dedicated format shown in Fig. 7, and corresponds to the two-syllable word "da3" "jia4". The data record includes a key 154 and a value 156. The key 154 include the Index 144 of only the second syllable "jia4", and tone information 146 and 148 for the first and second syllables. Following the key 154, the value 156 includes Hanzi character indexes in the candidate lists for the first and second syllables.

As described above, the minimum length of a syllable index is 9 bits, tone information entries include 1 bit per tone, or 5 bits per entry, and the length of each candidates list index is dependent upon the number of candidates in a candidates list, with fixed-length indexes dependent upon the number of candidates in the longest candidates list generally being preferred. Therefore, the index 144 is at least 9 bits in length, the tone information entries 146 and 148 are 5 bits long, as shown, and although the indexes 150 and 152 are shown as having one-bit length, these indexes may be longer than one bit.

In order to provide whole-byte length two-character word language data records, the key 154 and value 156 are preferably formatted to occupy a number of whole bytes. Since the index 130 or 144 is at least 9 bytes in length, an index cannot be stored in a single byte. Each tone value 132,134,146, and 148 is preferably 5 bits in length, and thus occupies less than one byte. The key 140 or 154 may therefore be stored, for example, in three bytes, in which the index 130/144 is stored in at least the first byte and the first bit of the second byte, and the last 5 bits of each of the second and third bytes store tone information. Candidate list indexes having a length of one byte, forming a 2-byte record value 138 or 156 support up to 256 candidates in any candidate list. Although this formatting provides a whole-byte length data record, other data record lengths are also possible, as will be apparent to those skilled in the art.

Relative to the language data record format shown in Fig. 5, the dedicated format shown in Fig. 7 saves one syllable index per record. The record format of Fig. 5 includes an index of each syllable, whereas a first syllable index is not stored in the record format of Fig. 7. Although the record format of Fig. 7 is supported by the above array of offsets, the majority of words are two-character words, resulting in significant overall memory savings, which is especially important where memory resources are limited.

An electronic device is enabled for Chinese text input by installing Chinese language data on the device. Identifiers for each syllable are calculated, as described above, and used to generate the identifier arrays shown in Figs. 1 and 2, the correspondence array in Fig. 3, and the tone information array shown in Fig. 4. Using the indexes in the identifier arrays, language data records are created. Two-character words are preferably represented with data records having the format shown in Fig. 7 and accessed using an array of offsets. Data records corresponding to words having more than two characters preferably have the format shown in Fig. 5. These data records are used to replace input Pinyin syllables entered by a user with corresponding Chinese text Hanzi characters. As those skilled in the art will appreciate, user inputs of Pinyin syllables may be replaced with Bopomofo syllables on a display, and then converted to Chinese Hanzi characters as text input. In most implementations, the arrays and data records are generated and made available by a language data source, such as a provider of a text input software application or module, and installed on an electronic device. A user of such a device thereby installs previously generated language data on the device without having to first generate the language data.

The language data described above simplifies input of Chinese text for which data records exist. According to a further embodiment of the present invention, new words, phrases and sentences added by a user are stored. When a user commits an inputted Pinyin sequence, the sequence is segmented and converted into a sequence of Chinese text Hanzi syllables, using the above data records, for display to a user. When the Chinese text is displayed, the user may change the candidates if different input text was intended, by Invoking a lookup function based on any part of the sequence, for example. Where the user has changed the candidates for the sequence of Pinyins after the conversion, new words with the changed candidates are formed and added to the language data, as described in further detail below.

For example, where the user inputs the Pinyin sequence "zhu4 ni3 hao3yun4", the sequence may be segmented as zhu4/ni3/hao3yun4, which corresponds to the Chinese text 驻 你 好运. The Chinese character 驻 is first candidate of the Pinyin syllable "zhu4". If the user changes the candidate for the first Pinyin from 驻 to 祝, where 祝 is the fourth candidate of the Pinyin "zhu4", a new word is formed and added to the language data.

The particular new word formed when a user changes a candidate is dependent upon the position of the candidate in an input sequence. If the candidate selected by the user is the first word in a sequence, then the next word in the sequence is added to the first, word and the new word results from unifying the two. In the above example, the candidate for the first Pinyin is changed by the user, so the second Pinyin in the sequence is added to the first Pinyin to form the new word, and a data record for the new word is added to the language data. The candidate for the first Pinyin in the new word is the selected candidate.

Similarly, where the candidate selected by the user corresponds to the last word in a sequence, the previous word is added to the last word and the new word results from unifying the two. If the candidate selected by the user corresponds to an intermediate word between two other words, two new words are formed by adding the preceding word to the intermediate word and adding the subsequent word to the intermediate word. The two new words are then added to the language data.

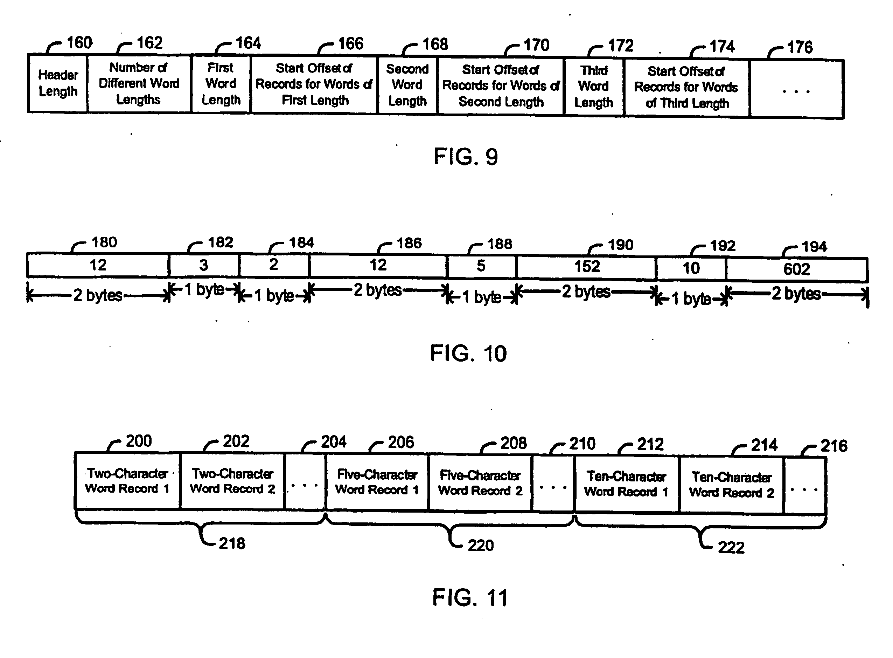

The user input patterns are stored in learning language data, which preferably includes a learning language data header and a learning language data array. Fig. 9 shows a block diagram of a learning language data header format, Fig.10 shows a block diagram of an example learning language data header, and Fig. 11 is a block diagram showing a learning language data array.

Learning language data may include data records for Chinese words of varying lengths. The language data header shown in Fig. 9 includes information about the lengths words for which data records are stored In the learning language data, and the locations of these data records In the learning language data. The header length entry 160 is the length of the header itself, including the header length entry. The next entry 162 is the number of different word lengths for which data records exist in the learning language data array, described in further detail below. For example, if the learning language data includes data records for two-character and five-character words, then entry 162 is 2.

The remainder of the learning language data header comprises pairs of word lengths and offsets. The number of pairs corresponds to the number of different word lengths in the header entry 162. Three such pairs 164/166,168/170, and 172/174 are shown in the header of Fig. 9. Where data records for more than three different word lengths are stored in the learning language data, the learning language data header includes further pairs, generally designated 176. Each pair includes a word length entry 164,168, or 172, indicating a particular length of words for which data records exist in the learning language data, and an offset entry 166, 170, or 174, indicating the offset of the first data record, in the learning language data array, for words of the length indicated in the preceding word length entry.

The example learning language data header in Fig.10 includes a two-byte header length entry 180, a one-byte word length number entry 182, and three pairs of one-byte word length entries and two-byte offset entries 184/186,188/190, and 192/194. The length of a learning language header and any entry therein is in no way restricted to the lengths shown in Fig. 10. Overall length of a header is dependent upon the associated learning language data array, and may change as new words are added to the learning language data array, where a data record for a new word having a different length than the words for which data records exist is added to the learning language data array, for example. The content of the header of Fig. 10 is described in further detail below, in conjunction with the learning language data array shown in Fig.11.

The learning language data array In Fig.11 includes an array of two-character words 218, an array of five-character words 220, and an array of ten-character words 222. Each of these arrays in the learning language data array includes a series of records 200-204, 206-210, and 212-216. It should be appreciated that learning language data arrays are dependent upon user inputs and may therefore be different for different users and electronic devices. A learning language data array may include data records for fewer, further, or different word lengths than those shown in Fig. 11.

Referring now to both Figs. 10 and 11, the header length entry indicates that the header is 12 bytes long. As shown in the word length number entry 182, the corresponding language data array includes data records for 3 different lengths of words. The first word length is two characters, as indicated by the word length entry 184, and the first data record 200 for a two-character word has an offset of 12 in the learning language data array, as shown at 200. Although the learning language data is shown separately in Fig. 11 in order to avoid congestion in the drawings, it should be appreciated that the 12-byte learning language data header preferably precedes the learning language data array in the learning language data. It should also be apparent that, for the purposes of illustration, it is assumed that the learning language data header and array are stored as a plurality of one-byte entries in a memory, such that the record 200 is actually the thirteenth entry in the learning language data, offset from the first entry of the learning language data (i.e., the first header length byte) by 12 entries.

The learning language data array also includes data records for 5-character words, indicated in the word length entry 188, starting at offset 152 in the learning language data array. Where two-character words are stored in a 5-byte dedicated format as described above, the 140 entries between the first two-character word data record 200 at offset 12 and the first five-character word data record 206 at offset 152 accommodate 28 data records.

The word length and offset entries 192 and 194 indicate that data records for ten-character words begin at an offset of 625 in the learning language data array. If the data record format in Fig. 5 is used for five-character words, with two bytes per index/tone pair per syllable and one byte per candidate index, then each data record is 15 bytes, and there are 30 such 15-byte data records for five-character words in the learning language data array, occupying offsets 152 through 601. The remainder of the learning language data array following the entry 212 at offset 625, stores data records for ten-character words.

The preceding description and the examples of learning language data shown in Figs. 10 and 11 assume that the language data array is accessible using offsets of a whole number of bytes. However, other access mechanisms are also possible, where the learning language data header stores indexes, addresses, or other pointers to the learning language data array.

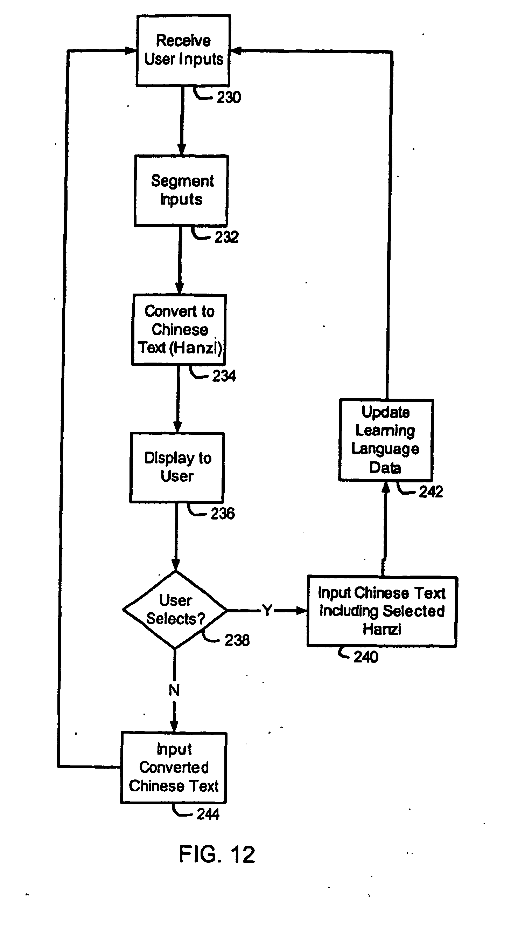

Various components of the language data are described above. Use of language data during text input is described in further detail below. Fig. 12 is a flow diagram of a method of using language data.

The method begins at step 230 where user inputs are received and buffered. As those skilled In the art will appreciate, user inputs for Chinese text are typically in the form of Pinyin syllables. The received user input sequence is segmented into words at step 232 and converted into corresponding Chinese text at step 234. Those skilled in the art will also appreciate that Input Pinyin syllables may also be replaced with corresponding Bopomofo syllables on a display before the Inputs are converted into Chinese text. The conversion at step 234 involves searching the language data, including learning language data if available, for each word, and replacing the input Pinyin sequence, and displayed Bopomofo sequence if applicable, with the Hanzi candidates identified in a corresponding data record In the language data.

At step 236, the converted Chinese text, comprising the Hanzi candidates, is displayed to a user at a current text entry position on a text input screen, and preferably replaces the input Pinyins or displayed Bopomofos. It is then determined, at step 238, whether the user has changed any of the Hanzi candidates, by invoking and choosing from a lookup window, for example. The method proceeds at step 244 to input the converted Chinese text into the electronic device in conjunction with which the method is implemented, and then to receive further inputs from the user at step 230 where the user has not changed any of the candidates. The further user inputs are then segmented and converted as described above to input new words.

Where it is determined at step 238 that the user has changed a candidate, the sequence of candidates including the selected candidate is input to the electronic device and replaces the currently displayed candidate sequence corresponding to the input Pinyin sequence on the input screen. In order to provide for learning as described above, one or more new words are formed as described above, and learning language data is updated at step 242 with the new word or words.

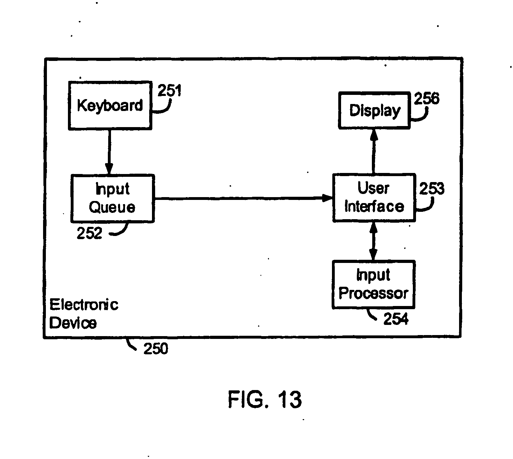

Fig. 13 is a block diagram of a system of using language data. The system of Fig. 13 includes a keyboard 251, an input queue 252, a user interface 253, an input processor 254, and a display 256, all implemented in an electronic device 250.

The keyboard 251 in most implementations includes keys which represent characters used for input of Pinyin syllables, and may be a full alphanumeric keyboard such as a QWERTY or DVORAK keyboard, a telephone keypad, or some other type of keyboard or keypad. However, it should be appreciated that the keyboard 251 may instead be a graphical interface which supports user input through a touch screen, or handwriting using a stylus, for example. In the electronic device 250, user inputs from the keyboard 251 are received and buffered by the input queue 252.

The user interface 253 provides an interface to the user of the electronic device 250. it accepts inputs from the user via the keyboard 251, and also provides outputs to the user via the display 256. The user interface 253 displays, for example, a text input screen for composing text on the display screen 156.

The input processor 254 receives buffered Pinyin inputs from the input queue 252, through the user interface 253. The input processor 254 segments the inputs into words and identifies Chinese text candidates based on the segmented inputs. These identified candidates are then displayed on the display 256. The input processor 254 accesses the above arrays and language data records as necessary when Chinese text is being input to the electronic device 250. Where the system of Fig. 13 supports learning, then the input processor 254 also accesses and stores learning language data records.

In Fig. 13, the arrays and data records are stored in the input processor 254, incorporated as part of software code implementing the input processor 254, for example. Alternatively, the arrays and data records are stored In a buffer or memory in, or at least accessible to, the input processor 254. Such a memory comprises one or more data stores and is implemented using one or more types of storage component. Electronic devices such as 250 typically include both writeable memory, Random Access Memory (RAM) for example, and Read Only Memory (ROM), from which data may only be read. Writeable memory may be either volatile or non-volatile, although non-volatile memory such as Flash RAM or battery backed-up RAM is preferred when any data in the writeable memory should be maintained in the event of loss of power. Since the arrays and language data records are not typically changed once established, they are preferably stored in non-volatile memory, which need not be a writeable memory. Learning language data records are preferably stored in non-volatile writeable memory, since new learning language data records are added when learning is enabled.

In a preferred arrangement, the input processor 254 is implemented as a software application or a software module configured to operate in conjunction with one or more software applications on the electronic device 250 to enable Chinese text input for processing by such software applications.

The display 256 provides visual data output to a user of the electronic device 250. In portable electronic devices, for example, liquid crystal displays are often used.

User inputs for entering Chinese text on the electronic device 250 are made by depressing keys on the reduced keyboard 251. Text entry may be invoked by the user, for example, by starting a particular software application, module, or utility, using a particular function supported on the electronic device 250. Whenever an operation or function requires input of Chinese text, the Chinese text input system processes user Pinyin inputs to predict correct Chinese syllables. Where more than one software application supports text Input, for example, the Chinese text input system is preferably implemented as a software module or utility that can be called or invoked by any of the software applications. Alternatively, each such software application may incorporate software Instructions to perform Chinese text input as described herein.

As will be apparent, the user interface 253 presents a text entry screen on the display 256 to aid in text entry. The particular content and formatting of the text entry screen is dependent, for example, upon the nature of the text being entered, the function for which text is being entered, or the software application currently in use. Plnyins are initially displayed on the text entry screen, and may subsequently be replaced with corresponding Bopomofos. As the input Pinyins are segmented and converted into Chinese text, Hanzi character candidates identified by the text entry system or selected by the user are replaced with Hanzi characters.

When user Pinyin inputs have been received, the input processor 254 segments and converts the Pinyin inputs into Chinese text, by searching language data records, and learning language data records if they exist. As described above, the Pinyins input by the user are displayed on the display 256, and replaced with Chinese text after the Pinyins have been segmented and converted. When a candidate Hanzi character in the Chinese text is changed by the user, the input processor 254 replaces the candidate with the selected candidate on the text entry screen on the display 256, and adds one or more new words to learning language data where learning is enabled. User selection of a candidate may be accomplished, for example, by invoking a lookup function based on a sequence of user inputs and using navigation keys on the keyboard 251, or an auxiliary input device (not shown) such as a thumbwheel, to select from a list of candidates corresponding to the sequence of inputs. In one example, when the lookup function is invoked, the Pinyins input by the user, or the corresponding Bopomofos are preferably displayed, either in the text input screen or a lookup window, and the user selects the input sequence or any part thereof on which the lookup function should be based. The user then selects from one or more Hanzi variants for the input sequence, and the selected variant replaces the input sequence in the text input screen on the display 256.

Although the above description refers to functions performed by the input processor 254, it will be appreciated by those skilled in the art that these functions of the input processor 254 are directed by software instructions in a software application, module, or utility in which a Chinese text input method is implemented.

It will be appreciated that the above description relates to preferred embodiments by way of example only. Many variations on the systems and methods described above will be obvious to those knowledgeable In the field, and such obvious variations are within the scope of the invention as described and claimed, whether or not expressly described.

**Claims**

1. A language data structure for use in converting Chinese Pinyin syllables into Chinese Hanzi characters in a system as claimed in claim 18, the data structure comprising:

a plurality of Hanzi character candidate lists, each list comprising Hanzi character candidates associated with a Pinyin syllable, and each Hanzi character candidate in each list having an index in the list;

a plurality of language data records, each language data record corresponding to a word having a plurality of Pinyin syllables and comprising a value (108),

wherein the value (108) in each language data record comprises a sequence of indexes (94, 96, 98) of Hanzi character candidates, in the lists of candidates respectively associated with the Pinyin syllables of the word, that represent the Pinyin syllables of the word;

**characterized in that**

each language data record further comprises a key (106), wherein the key (106) in each language data record comprises a sequence of indexes (82, 86, 90) and tone information (84, 88, 92) for the Pinyin syllables of the word to which the language data record corresponds; and

the data structure comprises one or more learning language data records, each learning language data record being created by a user by changing one or more of the Hanzi character candidates in a language data record in order to form a new word.

2. The language data structure of claim 1, wherein each data record is a whole number of bytes in length.

3. The language data structure of claim 1, wherein the index and tone information for each Pinyin syllable are stored in two bytes in a data record.

4. The language data structure of claim 3, wherein the index is 10 bits in length, and wherein the tone information is 5 bits in length.

5. The language data structure of claim 1, wherein the plurality of language data records are stored in a plurality of arrays, and wherein each array stores language data records corresponding to words having the same number of Pinyin syllables.

6. The language data structure of clam 5, wherein language data records in each of the plurality of arrays are sorted based on a first index in the sequence of indexes and tone information.

7. The language data structure of claim 1, further comprising an array of Pinyin syllable identifiers associated with Pinyin syllables, where in the indexes of the Pinyin syllables of the word are indexes, in the array of Pinyin - syllable identifiers, of the identifiers respectively associated with the Pinyin syllables of the word.

8. The language data structure of claim 7, wherein each syllable comprises n+1 characters from an alphabet of N characters, and wherein the identifiers are determined according to the following formula:

$$ID = index_0 * (N^0) + index_1 * (N^1) + \ldots + index_n * (N^n),$$

where:

index$_0$ is the index of a first character in the syllable,
index$_1$ is the index of a second character in the syllable,
index$_n$ is the index of an (n+1)th character in the syllable, and
N is the total number of the characters used for syllable construction.

9. The language data structure of claim 7, further comprising an array of Chinese Bopomofo syllable identifiers associated with Bopomofo syllables and a correspondence array indicating correspondence between each Pinyin syllable identifier and its corresponding Bopomofo syllable identifier.

10. The language data structure of claim 1, wherein the plurality of data records comprises language data records for two-syllable words, and wherein each language data record for a two-syllable word comprises:

a key comprising an index of a second Pinyin syllable in the two-syllable word and tone information entry for a first Pinyin syllable and the second Pinyin syllable in the two-syllable words; and

a value comprising a sequence of indexes of Hanzi character candidates, in the lists of candidates respectively associated with the first and second Pinyin syllables, that represent the first and second Pinyin syllables.

11. The language data structure of claim 10, wherein the language data records for two-syllable words are stored in a data record array, wherein each of the language data records for two-syllable words is a variant associated with the first Pinyin syllable, wherein variants associated with the same first Pinyin syllable are grouped in the data record array, and wherein the language data structure further comprises an array of offsets, each offset comprising an offset, in the data record array, of a first variant associated with a first Pinyin syllable.

12. A method of creating Chinese language data on a computer system (250), comprising the steps of:

generating identifiers for each of a plurality of Chinese Pinyin syllables;
storing, in a memory of the computer system (250), the generated identifiers in an array of identifiers, each identifier in the array of identifiers having an array index;
generating a plurality of Hanzi character candidate lists, each list comprising Hanzi character candidates associated with a Pinyin syllable, and each Hanzi character candidate in each list having a candidate index in the list;
for each of a plurality of words having multiple Pinyin syllables, generating a data record comprising a value (108), wherein the value (108) comprises a candidate index, in the list of candidates associated with each of the multiple Pinyin syllables, of the candidate that represents each of the multiple Pinyin syllables;
**characterized in that**
each data record further comprises a key (106), wherein the key (106) comprises an array index (82, 86, 90) of the identifier in the array of identifiers for each of the multiple Pinyin syllables and tone information (84, 88, 92) for each of the multiple Pinyin syllables;
the method further comprising the step of:
creating one or more learning language data records, each learning data record being created by a user by changing one or more of the candidate indices in a data record in order to form a new word.

13. The method of claim 12, further comprising the step of sorting the array of identifiers in increasing order of identifier.

14. The method of claim 12, wherein the step of generating a data record comprises the step of generating a data record comprising a key and a value for each of a plurality of two-syllable words, wherein the key comprises an array index of the identifier in the array of identifiers for a second Pinyin syllable in the two-syllable word and tone information for a first Pinyin syllable and the second Pinyin syllable in the two-syllable word, and where in the value comprises a candidate index, in the list of candidates associated with each of the first and second Pinyin syllables, of the candidate that represents each of the first and second Pinyin syllables.

15. The method of claim 14, comprising the steps of:

storing the data records for two-syllable words a data record array, wherein data records for two-syllable words having the same first Pinyin syllable are grouped in the data record array; and
generating an array of offsets, each offset comprising an offset, in the data record array, of a first data record associated with a first Pinyin syllable.

16. The method of claim 12, further comprising the step of storing the data records in one of a plurality of data record arrays, wherein each array stores data records corresponding to words having a predetermined number of Pinyin syllables.

17. The method of claim 16, where in the data records in each of the plurality of data record arrays are sorted based on a first array index in each data record.

18. A system (250) of using Chinese language data for converting Chinese Pinyin syllables into Chinese Hanzi characters, the language data including a plurality of Hanzi character candidate lists, each list comprising Hanzi character candidates associated with a Pinyin syllable, and each Hanzi character candidate in each list having an index in the list, and a plurality of language data records, each language data record corresponding to a word having a plurality of Pinyin syllables (100, 102,104) and comprising a value (108);
the value (108) in each language data record comprising a sequence of indexes (94, 96, 98) of Hanzi character candidates, in the lists of candidates respectively associated with the Pinyin syllables of the word, that represent the Pinyin syllables of the word,

the system (250) comprising:

a keyboard (251) having keys representing a plurality of characters for composing Pinyin syllables;

an input queue (252) configured to receive input Pinyin syllable from the keyboard (251);

a memory configured to store the plurality of Hanzi character candidate lists and the plurality of data records;

an input processor (254) operatively coupled to the memory and the input queue (252) and configured to segment the input Pinyin syllables into input words, to search the language data records for language data record respectively corresponding to each input word including the input Pinyin syllables, and to convert each input word into the Chinese Hanzi character candidates using the Hanzi character candidate indexes in the corresponding data record;

a display (256); and

a user interface (253) coupled between the display (256) and the input processor (254) to display the input Pinyin syllables on the display (256) and to replace the input Pinyin syllables with the Chinese Hanzi character candidates when the input Pinyin syllables are converted by the input processor (254),

**characterized in that**

each language data record further comprises a key (106),

the key (106) in each language data record comprising a sequence of indexes (82, 86, 90) and tone information (84, 88, 92) for the Pinyin syllables of the word to which the language data record corresponds, and

the language data further includes one or more learning language data records, each learning data record being created by a user by changing one or more of the Hanzi character candidates in a language data a record in order to form a new word.

19. The system of claim 18, wherein the input queue (252) is further configured to receive a Hanzi character selection input identifying a selected Hanzi character representing one or more of the input Pinyin syllables, and where in the input processor (254) is further configured to determine whether a Hanzi character selection input has been received, and to convert the one or more of the input Pinyin syllable inputs into the selected Hanzi characters where a Hanzi character selection input has been received.

20. The system of claim 19, wherein the input processor (254) is further configured to form a new word including the one or more input Pinyin syllables, to generate a new data record corresponding to the new word, and to store the new data record in the memory.

21. The system of claim 20, wherein the input processor (254) is further configured to search the language data records and any new data records for data records corresponding to each input word.

**Patentansprüche**

1. Sprachdatenstruktur zur Verwendung bei der Konvertierung von chinesischen Pinyin-Silben in chinesische Hanzi-Schriftzeichen in einem System gemäß Anspruch 18, wobei die Datenstruktur aufweist:

eine Vielzahl von Hanzi-Zeichen-Kandidatenverzeichnissen, wobei jedes Verzeichnis zu einer Pinyin-Silbe gehörende Hanzi-Zeichen-Kandidaten aufweist, und jeder Hanzi-Zeichen-Kandidat in jedem Verzeichnis einen Index in dem Verzeichnis hat;

eine Vielzahl von Sprachdatensätzen, wobei jeder Sprachdatensatz einem Wort entspricht, das eine Vielzahl von Pinyin-Silben hat und einen Wert (108) aufweist,

wobei der Wert (108) in jedem Sprachdatensatz aufweist eine Sequenz von Indizes (94, 96, 98) von Hanzi-Zeichen-Kandidaten in dem Verzeichnis von Kandidaten, die jeweils zu den Pinyin-Silben des Worts gehören, welche die Pinyin-Silben des Worts darstellen;

**dadurch gekennzeichnet, dass**

jeder Sprachdatensatz weiter einen Schlüssel (106) aufweist, wobei der Schlüssel (106) in jedem Sprachdatensatz eine Sequenz von Indizes (82, 86, 90) und eine Klanginformation (84, 88, 92) für die Pinyin-Silben des Wortes aufweist, das dem Sprachdatensatz entspricht; und

die Datenstruktur einen oder mehrere lernende(n) Sprachdatensatz/ Sprachdatensätze aufweist, wobei jeder lernende Sprachdatensatz von einem Benutzer erzeugt wird durch Ändern eines oder mehrerer der Hanzi-Zeichen-Kandidaten in einem Sprachdatensatz, um ein neues Wort zu bilden.

2. Sprachdatenstruktur gemäß Anspruch 1, wobei jeder Datensatz eine ganze Anzahl von Bytes lang ist.

3. Sprachdatenstruktur gemäß Anspruch 1, wobei der Index und die Klanginformation für jede Pinyin-Silbe in zwei Bytes in einem Datensatz gespeichert sind.

4. Sprachdatenstruktur gemäß Anspruch 3, wobei der Index eine Länge von 10 Bit hat und wobei die Klanginformation eine Länge von 5 Bit hat.

5. Sprachdatenstruktur gemäß Anspruch 1, wobei die Vielzahl von Sprachdatensätzen in einer Vielzahl von Arrays gespeichert ist, und wobei jedes Array Sprachdatensätze speichert, die Wörtern mit derselben Anzahl von Pinyin-Silben entsprechen.

6. Sprachdatenstruktur gemäß Anspruch 5, wobei die Sprachdatensätze in jedem der Vielzahl von Arrays basierend auf einem ersten Index in der Sequenz von Indizes und der Klanginformation sortiert sind.

7. Sprachdatenstruktur gemäß Anspruch 1, die weiter aufweist ein Array von zu Pinyin-Silben gehörenden Pinyin-Silben-Identifikatoren, wobei in dem Array von Pinyin-Silben-Identifikatoren die Indizes der Pinyin-Silben des Worts Indizes der Identifikatoren sind, die zu den Pinyin-Silben des Worts gehören.

8. Sprachdatenstruktur gemäß Anspruch 7, wobei jede Silbe n+1-Zeichen aus einem Alphabet von N Schriftzeichen aufweist und wobei die Identifikatoren gemäß der folgenden Formel bestimmt werden:

$$ID = index_0 * (N^0) + index_1 * (N^1) + \ldots + index_n * (N^n),$$

wobei:

$index_0$ der Index eines ersten Zeichens in der Silbe ist,
$index_1$ der Index eines zweiten Zeichens in der Silbe ist,
$index_n$ der Index eines (n+1)-ten Zeichens in der Silbe ist, und
N die gesamte Anzahl der Zeichen ist, die für eine Silbenkonstruktion verwendet wird.

9. Sprachdatenstruktur gemäß Anspruch 7, die weiter ein Array von chinesischen Bopomofo-Silben-Identifikatoren, die zu Bopomofo-Silben gehören, und ein Zugehörigkeits-Array aufweist, das eine Zugehörigkeit zwischen jedem Pinyin-Silben-Identifikator und seinem entsprechenden Bopomofo-Silben-Identifikator anzeigt.

10. Sprachdatenstruktur gemäß Anspruch 1, wobei die Vielzahl von Datensätzen Sprachdatensätze für zweisilbige Wörter aufweist und wobei jeder Sprachdatensatz für ein zweisilbiges Wort aufweist:

einen Schlüssel, der einen Index einer zweiten Pinyin-Silbe in dem zweisilbigen Wort und einen Klanginformationseintrag für eine erste Pinyin-Silbe und die zweite Pinyin-Silbe in den zweisilbigen Wörtern aufweist; und einen Wert, der eine Sequenz von Indizes von Hanzi-Zeichen-Kandidaten in den Verzeichnissen von Kandidaten, die jeweils zu den ersten und zweiten Pinyin-Silben gehören, welche die ersten und zweiten Pinyin-Silben darstellen.

11. Sprachdatenstruktur gemäß Anspruch 10, wobei die Sprachdatensätze für zweisilbige Wörter in einem Datensatzarray gespeichert werden, wobei jeder der Sprachdatensätze für zweisilbige Wörter eine zu der ersten Pinyin-Silbe gehörende Variante ist, wobei zu der selben ersten Pinyin-Silbe gehörende Varianten in dem Datensatzarray gruppiert werden, und wobei die Sprachdatenstruktur weiter ein Array von Offsets aufweist, wobei jeder Offset in dem Datensatzarray einen Offset einer zu einer ersten Pinyin-Silbe gehörenden ersten Variante aufweist.

12. Verfahren zum Erzeugen von chinesischen Sprachdaten auf einem Computersystem (250), das die Schritte aufweist:

Erzeugen von Identifikatoren für jede einer Vielzahl von chinesischen Pinyin-Silben;
Speichern der erzeugten Identifikatoren in einem Array von Identifikatoren in einem Speicher des Computersystems (250), wobei jeder Identifikator in dem Array von Identifikatoren einen Arrayindex aufweist;
Erzeugen einer Vielzahl von Hanzi-Zeichen-Kandidatenverzeichnissen, wobei jedes Verzeichnis zu einer Pinyin-Silbe gehörende Hanzi-Zeichen-Kandidaten aufweist, und jeder Hanzi-Zeichen-Kandidat in jedem Verzeichnis einen Kandidatenindex in dem Verzeichnis hat;

für jedes einer Vielzahl von Wörtern mit mehreren Pinyin-Silben Erzeugen eines Datensatzes, der einen Wert (108) aufweist, wobei der Wert (108) in dem Verzeichnis von zu jeder der mehrfachen Pinyin-Silben gehörenden Kandidaten einen Kandidatenindex des Kandidaten aufweist, der jede der mehrfachen Pinyin-Silben darstellt. **dadurch** charakterisiert, dass

jeder Datensatz ferner einen Schlüssel (106) aufweist, wobei der Schlüssel (106) einen Arrayindex (82, 86, 90) des Identifikators in dem Array von Identifikatoren für jede der mehreren Pinyin-Silben und eine Klanginformation (84, 88, 92) für jede der mehreren Pinyin-Silben aufweist;

wobei das Verfahren weiter den Schritt aufweist:

Erzeugen eines oder mehrerer lernender Sprachdatensatzes/ Sprachdatensätze, wobei jeder lernende Sprachdatensatz von einem Benutzer erzeugt wird durch Ändern eines oder mehrerer Kandidaten-Indizes in einem Datensatz, um ein neues Wort zu bilden.

**13.** Verfahren gemäß Anspruch 12, das weiter den Schritt eines Sortierens des Arrays von Identifikatoren in aufsteigender Reihenfolge des Identifikators aufweist.

**14.** Verfahren gemäß Anspruch 12, wobei der Schritt des Erzeugens eines Datensatzes aufweist den Schritt des Erzeugens eines Datensatzes, der einen Schlüssel und einen Wert für jedes der Vielzahl von zweisilbigen Wörtern aufweist, wobei der Schlüssel einen Arrayindex des Identifikators in dem Array von Identifikatoren für eine zweite Pinyin-Silbe in dem zweisilbigen Wort und eine Klanginformation für eine erste Pinyin-Silbe und die zweite Pinyin-Silbe in dem zweisilbigen Wort aufweist, und wobei der Wert in dem Verzeichnis von zu jeder der ersten und zweiten Pinyin-Silben gehörenden Kandidaten einen Kandidatenindex des Kandidaten aufweist, der jede der ersten und zweiten Pinyin-Silben darstellt.

**15.** Verfahren gemäß Anspruch 14, das die Schritte aufweist:

Speichern der Datensätze für zweisilbige Wörter in einem Datensatzarray, wobei Datensätze für zweisilbige Wörter, welche dieselbe erste Pinyin-Silbe haben, in dem Datensatzarray gruppiert werden; und

Erzeugen eines Arrays von Offsets, wobei jeder Offset in dem Datensatzarray einen Offset eines ersten zu einer ersten Pinyin-Silbe gehörenden Datensatzes aufweist.

**16.** Verfahren gemäß Anspruch 12, das weiter den Schritt aufweist des Speichems des Datensatzes in einem der Vielzahl von Datensatzarrays, wobei jedes Array Datensätze entsprechend Wörtern mit einer vorgegebenen Anzahl von Pinyin-Silben speichert.

**17.** Verfahren gemäß Anspruch 16, wobei die Datensätze in jedem der Vielzahl von Datensatzarrays basierend auf einem ersten Arrayindex in jedem Datensatz sortiert werden.

**18.** System (250) einer Verwendung von chinesischen Sprachdaten zur Konvertierung von chinesischen Pinyin-Silben in chinesische Hanzi-Schriftzeichen, wobei die Sprachdaten umfassen eine Vielzahl von Hanzi-Zeichen-Kandidatenverzeichnissen, wobei jedes Verzeichnis zu einer Pinyin-Silbe gehörende Hanzi-Zeichen-Kandidaten aufweist, und jeder Hanzi-Zeichen-Kandidat in jedem Verzeichnis einen Index in dem Verzeichnis hat, und eine Vielzahl von Sprachdatensätzen, wobei jeder Sprachdatensatz einem Wort entspricht, das eine Vielzahl von Pinyin-Silben (100. 102, 104) hat und einen Wert (108) aufweist; wobei der Wert (108) in jedem Sprachdatensatz aufweist eine Sequenz von Indizes (94, 96, 98) von Hanzi-Zeichen-Kandidaten in dem Verzeichnis von Kandidaten, die jeweils zu den Pinyin-Silben des Worts gehören, welche die Pinyin-Silben des Worts darstellen; wobei das System (250) aufweist:

eine Tastatur (251) mit Tasten, die eine Vielzahl von Zeichen zum Zusammensetzen von Pinyin-Silben darstellen;

eine Eingangs-Warteschlange (252), die konfiguriert ist, eingegebene Pinyin-Silben von der Tastatur (251) zu empfangen;

ein Speicher, der konfiguriert ist, die Vielzahl von Hanzi-Zeichen-Kandidatenverzeichnissen und die Vielzahl von Datensätzen zu speichern;

ein Eingangsprozessor (254), der betriebsfähig mit dem Speicher und der Eingangs-Warteschlange (252) verbunden ist und konfiguriert ist, die eingegebenen Pinyin-Silben in Eingabewörter zu segmentieren, die Sprachdatensätze nach Sprachdatensätzen zu durchsuchen, die jeweils jedem Eingabewort einschließlich der eingegebenen Pinyin-Silben entsprechen, und jedes eingegebene Wort in die chinesischen Hanzi-Zeichen-Kandidaten unter Verwendung der Hanzi-Zeichen-Kandidatenindizes in den entsprechenden Datensatz zu konvertieren;

eine Anzeige (256); und

eine Benutzer-Schnittstelle (253), die zwischen der Anzeige (256) und dem Eingangsprozessor (254) angeordnet ist, um die eingegebenen Pinyin-Silben auf der Anzeige (256) anzuzeigen und die eingegebenen Pinyin-Silben durch die chinesischen Hanzi-Zeichen-Kandidaten zu ersetzen, wenn die eingegebenen Pinyin-Silben von dem Eingangsprozessor (254) konvertiert werden,

**dadurch gekennzeichnet, dass**

jeder Sprachdatensatz weiter einen Schlüssel (106) aufweist,

wobei der Schlüssel (106) in jedem Sprachdatensatz eine Sequenz von Indizes (82, 86, 90) und eine Klanginformation (84, 88, 92) für die Pinyin-Silben des Wortes aufweist, das dem Sprachdatensatz entspricht; und

der Sprachdatensatz weiter einen oder mehrere lernende(n) Sprachdatensatz/ Sprachdatensätze aufweist, wobei jeder lernende Sprachdatensatz von einem Benutzer erzeugt wird durch Ändern eines oder mehrerer der Hanzi-Zeichen-Kandidaten in einem Sprachdatensatz, um ein neues Wort zu bilden.

**19.** System gemäß Anspruch 18, wobei die Eingangs-Warteschlange (252) weiter konfiguriert ist, eine Hanzi-Zeichen-Auswahleingabe zu empfangen, die ein ausgewähltes Hanzi-Zeichen identifiziert, das eine oder mehrere der eingegebenen Pinyin-Silben darstellt, und wobei der Eingangsprozessor (254) weiter konfiguriert ist, zu bestimmen, ob eine Hanzi-Zeichen-Auswahleingabe empfangen wurde, und die eine oder mehrere der eingegebenen Pinyin-Silben-Eingaben in die gewählten Hanzi-Zeichen zu konvertieren, wenn eine Hanzi-Zeichen-Auswahleingabe empfangen wurde.

**20.** System gemäß Anspruch 19, wobei der Eingangsprozessor (254) weiter konfiguriert ist, ein neues Wort zu bilden, das die eine oder mehreren eingegebenen Pinyin-Silben umfasst, einen neuen Datensatz zu erzeugen, der dem neuen Wort entspricht, und den neuen Datensatz in dem Speicher zu speichern.

**21.** System gemäß Anspruch 20, wobei der Eingangsprozessor (254) weiter konfiguriert ist, die Sprachdatensätze und alle neuen Datensätze nach Datensätzen zu durchsuchen, die jedem eingegebenen Wort entsprechen.

## Revendications

**1.** Structure de données de langage destinée à être utilisée dans une conversion de syllabes chinoises Pinyin en caractères chinois Hanzi dans un système selon la revendication 18, la structure de données comprenant :

une pluralité de listes de caractères Hanzi candidats, chaque liste comprenant des caractères Hanzi candidats associés à une syllabe Pinyin, et chaque caractère Hanzi candidat dans chaque liste ayant un index dans la liste ;

une pluralité d'enregistrements de données de langage, chaque enregistrement de données de langage correspondant à un mot ayant une pluralité de syllabes Pinyin et comprenant une valeur (108),

dans laquelle la valeur (108) dans chaque enregistrement de données de langage comprend une séquence d'index (94, 96, 98) de caractères Hanzi candidats, dans les listes de candidats respectivement associés aux syllabes Pinyin du mot, qui représente les syllabes Pinyin du mot ;

**caractérisée en ce que**

chaque enregistrement de données de langage comprend en outre une clef (106), dans laquelle la clef (106) dans chaque enregistrement de données de langage comprend une séquence d'index (82, 86, 90) et des informations de sonorité (84, 88, 92) pour les syllabes Pinyin du mot auxquelles l'enregistrement de données de langage correspond ; et

la structure de données comprend un ou plusieurs enregistrements de données de langage d'apprentissage, chaque enregistrement de données de langage d'apprentissage étant créé par un utilisateur en changeant un ou plusieurs parmi les caractères Hanzi candidats dans un enregistrement de données de langage afin de former un nouveau mot.

**2.** Structure de données de langage selon la revendication 1, dans laquelle chaque enregistrement de données est d'une longueur d'un nombre entier d'octets.

**3.** Structure de données selon la revendication 1, dans laquelle l'index et les informations de sonorité pour chaque syllabe Pinyin sont mémorisés dans deux octets dans un enregistrement de données.

4.  Structure de données de langage selon la revendication 3, dans laquelle l'index est d'une longueur de 10 bits, et dans laquelle les informations de sonorité sont d'une longueur de 5 bits.

5.  Structure de données de langage selon la revendication 1, dans laquelle la pluralité d'enregistrements de données de langage sont mémorisés dans une pluralité de tableaux, et dans lesquels chaque tableau mémorise des enregistrements de données de langage correspondant aux mots ayant le même nombre de syllabes Pinyin.

6.  Structure de données de langage selon la revendication 5, dans laquelle des enregistrements de données de langage dans chacun parmi la pluralité de tableaux sont triés sur la base d'un premier index dans la séquence d'index et d'informations de sonorité.

7.  Structure de données de langage selon la revendication 1, comprenant en outre un tableau d'identificateurs de syllabes Pinyin associés aux syllabes Pinyin, dans laquelle les index des syllabes Pinyin du mot sont des index, dans le tableau d'identificateurs de syllabes Pinyin, des identificateurs respectivement associés aux syllabes Pinyin du mot.

8.  Structure de données de langage selon la revendication 7, dans laquelle chaque syllabe comprend n+1 caractères d'un alphabet de N caractères, et dans laquelle les identificateurs sont déterminés selon la formulation suivante :

$$ID = index_0 * (N^0) + index_1 * (N^1) + ... + index_n * (N^n),$$

où :

index$_0$ est l'index d'un premier caractère dans la syllabe,
index$_1$ est l'index d'un deuxième caractère dans la syllabe,
index$_n$ est l'index d'un $(n+1)^{ième}$ caractère dans la syllabe, et
N est le nombre total de caractères utilisés pour une construction de syllabe.

9.  Structure de données de langage selon la revendication 7, comprenant en outre un tableau d'identificateurs de syllabes chinoises Bopomofo associés à des syllabes Bopomofo et un tableau de correspondances indiquant une correspondance entre chaque identificateur de syllabes Pinyin et son identificateur de syllabes Bopomofo correspondant.

10. Structure de données de langage selon la revendication 1, dans laquelle la pluralité d'enregistrements de données comprend des enregistrements de données de langage pour des mots de deux syllabes, et dans laquelle chaque enregistrement de données de langage pour un mot de deux syllabes comprend :

une clef comprenant un index d'une seconde syllabe Pinyin dans le mot de deux syllabes et une entrée d'informations de sonorité pour une première syllabe Pinyin et la seconde syllabe Pinyin dans les mots de deux syllabes ; et
une valeur comprenant une séquence d'index de caractères Hanzi candidats dans les listes de candidats respectivement associés aux première et seconde syllabes Pinyin, qui représentent les première et seconde syllabes Pinyin.

11. Structure de données de langage selon la revendication 10, dans laquelle les enregistrements de données de langage pour des mots de deux syllabes sont mémorisés dans un tableau d'enregistrements de données, dans laquelle chacun parmi les enregistrements de données de langage pour des mots de deux syllabes est une variante associée à la première syllabe Pinyin, dans laquelle des variantes associées à la même première syllabe Pinyin sont groupées dans le tableau d'enregistrements de données, et dans laquelle la structure de données de langage comprend en outre un tableau de décalages, chaque décalage comprenant un décalage, dans le tableau d'enregistrements de données, d'une première variante associée à une première syllabe Pinyin.

12. Procédé de création de données de langage chinois sur un système (250) d'ordinateur, comprenant les étapes consistant à :

générer des identificateurs pour chacune parmi une pluralité de syllabes chinoises Pinyin ;

mémoriser, sur une mémoire du système (250) d'ordinateur, les identificateurs générés dans un tableau d'identificateurs, chaque identificateur dans le tableau d'identificateurs ayant un index de tableau ;

générer une pluralité de listes de caractères Hanzi candidats, chaque liste comprenant des caractères Hanzi candidats associés à une syllabe Pinyin, et chaque caractère Hanzi candidat dans chaque liste ayant un index candidat dans la liste ;

pour chacun parmi une pluralité de mots ayant des syllabe Pinyin multiples, générer un enregistrement de données comprenant une valeur (108), dans laquelle la valeur (108) comprend un index candidat, dans la liste de candidats associés à chacune des syllabes Pinyin multiples, du candidat qui représente chacune parmi les syllabes Pinyin multiples ;

**caractérisé en ce que**

chaque enregistrement de données comprend en outre une clef (106), dans lequel la clef (106) comprend un index (82, 86, 90) de tableau de l'identificateur dans le tableau d'identificateurs pour chacune parmi les syllabes Pinyin multiples et des informations de sonorité (84, 88, 92) pour chacune parmi les syllabes Pinyin multiples ;

le procédé comprenant en outre l'étape consistant à :

créer un ou plusieurs enregistrements de données de langage d'apprentissage, chaque enregistrement de données d'apprentissage étant créé par un utilisateur en changeant un ou plusieurs parmi les indices candidats dans un enregistrement de données afin de former un nouveau mot.

13. Procédé selon la revendication 12, comprenant en outre l'étape consistant à trier le tableau d'identificateurs dans un ordre croissant d'un identificateur.

14. Procédé selon la revendication 12, dans lequel l'étape consistant à générer un enregistrement de données comprend l'étape consistant à générer un enregistrement de données comprenant une clef et une valeur destinée à chacun parmi une pluralité de mots de deux syllabes, dans lequel la clef comprend un index de tableau de l'identificateur dans le tableau d'identificateurs destiné à une seconde syllabe Pinyin dans le mot de deux syllabes et des informations de sonorité pour une première syllabe Pinyin et la seconde syllabe Pinyin dans le mot de deux syllabes, et où la valeur comprend un index candidat, dans la liste de candidats associés à chacune parmi les première et seconde syllabes Pinyin, du candidat qui représente chacune parmi les première et seconde syllabes Pinyin.

15. Procédé selon la revendication 14, comprenant les étapes consistant à :

mémoriser les enregistrements de données pour des mots de deux syllabes d'un tableau d'enregistrements de données, dans lequel des enregistrements de données pour des mots de deux syllabes ayant la même première syllabe Pinyin sont groupés dans le tableau d'enregistrement de données ; et

générer un tableau de décalages, chaque décalage comprenant un décalage, dans le tableau d'enregistrements de données, d'un premier enregistrement de données associé à une première syllabe Pinyin.

16. Procédé selon la revendication 12, comprenant en outre l'étape consistant à mémoriser les enregistrements de données dans un parmi une pluralité de tableaux d'enregistrements de données, dans lesquels chaque tableau mémorise des enregistrements de données correspondant aux mots ayant un nombre prédéterminé de syllabe Pinyin.

17. Procédé selon la revendication 16, dans lequel les enregistrements de données dans chacun parmi la pluralité de tableaux d'enregistrements de données sont triés sur la base d'un premier index de tableau dans chaque enregistrement de données.

18. Système (250) d'utilisation de données de langage chinois destiné à convertir des syllabes chinoises Pinyin en caractères chinois Hanzi, les données de langage comportant une pluralité de listes de caractères Hanzi candidats, chaque liste comprenant des caractères Hanzi candidats associés à une syllabe Pinyin, et chaque caractère Hanzi candidat dans chaque liste ayant un index dans la liste, et une pluralité d'enregistrements de données de langage, chaque enregistrement de données de langages correspondant à un mot ayant une pluralité de syllabes Pinyin (100, 102, 104) et comprenant une valeur (108) ;

la valeur (108) dans chaque enregistrement de données de langage comprenant une séquence d'index (94, 96, 98) de caractères Hanzi candidats, dans les listes de candidats respectivement associés aux syllabes Pinyin du mot, qui représentent les syllabes Pinyin du mot,

le système (250) comprenant :

un clavier (251) ayant des touches représentant une pluralité de caractères destinées à composer des syllabes Pinyin ;

une file d'attente (252) d'entrée configurée afin de recevoir une syllabe Pinyin d'entrée depuis le clavier (251);

une mémoire configurée afin de mémoriser la pluralité de listes de caractères Hanzi et la pluralité d'enregistrements de données ;

un processeur (254) d'entrée couplé de manière fonctionnelle à la mémoire et à la file d'attente (252) d'entrée et configuré afin de segmenter les syllabes Pinyin d'entrée en mots d'entrée, afin de rechercher, dans les enregistrements de données de langage, un enregistrement de données de langage correspondant respectivement à chaque mot d'entrée comportant les syllabes Pinyin d'entrée, et afin de convertir chaque mot d'entrée en les caractères chinois Hanzi candidats en utilisant l'index de caractères Hanzi candidats dans l'enregistrement de données correspondant ;

un dispositif d'affichage (256) ; et

une interface (253) utilisateur couplée entre le dispositif d'affichage (256) et le processeur (254) d'entrée afin d'afficher les syllabes Pinyin d'entrée sur le dispositif d'affichage (256) et afin de remplacer les syllabes Pinyin d'entrée par les caractères chinois Hanzi lorsque les syllabes Pinyin d'entrée sont converties par le processeur (254) d'entrée,

**caractérisé en ce que**

chaque enregistrement de données de langage comprend en outre une clef (106),

la clef (106) dans chaque enregistrement de données de langage comprenant une séquence d'index (82, 86, 90) et des informations de sonorité (84, 88, 92) pour les syllabes Pinyin du mot auxquelles l'enregistrement de données de langage correspond, et

les données de langage comportent en outre un ou plusieurs enregistrements de données de langage d'apprentissage, chaque enregistrement de données d'apprentissage étant créé par un utilisateur en changeant un ou plusieurs parmi les caractères Hanzi candidats dans un enregistrement de données de langage afin de former un nouveau mot.

19. Système selon la revendication 18, dans lequel la file d'attente (252) d'entrée est en outre configurée afin de recevoir une entrée de sélection de caractère Hanzi identifiant un caractère Hanzi sélectionné représentant une ou plusieurs parmi les syllabes Pinyin d'entrée, et où le processeur (254) d'entrée est en outre configuré afin de déterminer si une entrée de sélection de caractères Hanzi a été reçue, et afin de convertir la ou les entrées de syllabes Pinyin d'entrée en caractères Hanzi sélectionnés lorsqu'une entrée de sélection de caractère Hanzi a été reçue.

20. Système selon la revendication 19, dans lequel le processeur (254) d'entrée est en outre configuré afin de former un nouveau mot comportant la ou les syllabes Pinyin d'entrée, afin de générer un nouvel enregistrement de données correspondant au nouveau mot, et afin de mémoriser le nouvel enregistrement de données dans la mémoire.

21. Système selon la revendication 20, dans lequel le processeur (254) d'entrée est en outre configuré afin de rechercher, dans les enregistrements de données de langage et dans de quelconques nouveaux enregistrements de données, des enregistrements de données correspondant à chaque mot d'entrée.

EP 1 691 298 B1

| SylBop 1 | SylBop 2 | SylBop 3 | SylBop 4 | SylBop 5 | SylBop 6 | ... | SylBop 410 |
|---|---|---|---|---|---|---|---|
| 0 | 1 | 2 | 3 | 4 | 5 | ... | 409 |

**FIG. 1**

| SylPin 1 | SylPin 2 | SylPin 3 | SylPin 4 | SylPin 5 | SylPin 6 | ... | SylPin 410 |
|---|---|---|---|---|---|---|---|
| 0 | 1 | 2 | 3 | 4 | 5 | ... | 409 |

**FIG. 2**

| Index 1 | Index 2 | Index 3 | Index 4 | Index 5 | Index 6 | ... | Index 410 |
|---|---|---|---|---|---|---|---|
| 0 | 1 | 2 | 3 | 4 | 5 | ... | 409 |

**FIG. 3**

| Tone Info 1 | Tone Info 2 | Tone Info 3 | Tone Info 4 | Tone Info 5 | Tone Info 6 | ... | Tone Info 410 |
|---|---|---|---|---|---|---|---|
| 0 | 1 | 2 | 3 | 4 | 5 | ... | 409 |

**FIG. 4**

EP 1 691 298 B1

| Pinyin 1 Index | Tones for Pinyin 1 | Pinyin 2 Index | Tones for Pinyin 2 | Pinyin 3 Index | Tones for Pinyin 3 | Index of 1st character in candidates list for Pinyin 1 | Index of 2nd character in candidates list for Pinyin 2 | Index of 3rd character in candidates list for Pinyin 3 |
|---|---|---|---|---|---|---|---|---|
| 82 | 84 | 86 | 88 | 90 | 92 | 94 | 96 | 98 |

100   102   104

106   108

**FIG. 5**

| "da15" Index | 10001 | "jia35" Index | 00101 | "hao4" Index | 00010 | 0 | 1 | 0 |
|---|---|---|---|---|---|---|---|---|
| 110 | 112 | 114 | 116 | 118 | 120 | | | |

122   124

**FIG. 6**

EP 1 691 298 B1

| Index of Second Syllable | Tones for Initial Syllable | Tones for Second Syllable | Index of 1st character in candidates list for Initial Syllable | Index of 2nd character in candidates list for Second Syllable |
|---|---|---|---|---|
| ⌐130 | ⌐132 | ⌐134 | ⌐136 | ⌐138 |

140 — 142

**FIG. 7**

| "jia4" Index | 0 0 1 0 0 | 0 0 0 1 0 | 0 | 1 |
|---|---|---|---|---|
| ⌐144 | ⌐146 | ⌐148 | ⌐150 | ⌐152 |

154 — 156

**FIG. 8**

| Header Length | Number of Different Word Lengths | First Word Length | Start Offset of Records for Words of First Length | Second Word Length | Start Offset of Records for Words of Second Length | Third Word Length | Start Offset of Records for Words of Third Length | . . . |
|---|---|---|---|---|---|---|---|---|
| 160 | 162 | 164 | 166 | 168 | 170 | 172 | 174 | 176 |

**FIG. 9**

| 12 | 3 | 2 | 12 | 5 | 152 | 10 | 602 |
|---|---|---|---|---|---|---|---|
| 180 | 182 | 184 | 186 | 188 | 190 | 192 | 194 |

|←—2 bytes—→|←1 byte→|←1 byte→|←—2 bytes—→|←1 byte→|←—2 bytes—→|←1 byte→|←—2 bytes—→|

**FIG. 10**

| Two-Character Word Record 1 | Two-Character Word Record 2 | . . . | Five-Character Word Record 1 | Five-Character Word Record 2 | . . . | Ten-Character Word Record 1 | Ten-Character Word Record 2 | . . . |
|---|---|---|---|---|---|---|---|---|
| 200 | 202 | 204 | 206 | 208 | 210 | 212 | 214 | 216 |

{218}   {220}   {222}

**FIG. 11**

EP 1 691 298 B1

Receive
User Inputs
└─ 230

Segment
Inputs
└─ 232

Convert to
Chinese
Text (Hanzi)
└─ 234

Display to
User
└─ 236

Update
Learning
Language
Data
└─ 242

User
Selects? ──Y──→ Input Chinese Text
Including Selected
Hanzi
└─ 238                                └─ 240

N

Input
Converted
Chinese Text
└─ 244

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6073146 A
- EP 1985401 A